(19)

(11) EP 2 449 234 B1

(12) EUROPÄISCHE PATENTSCHRIFT

(45) Veröffentlichungstag und Bekanntmachung des Hinweises auf die Patenterteilung:
**31.07.2013 Patentblatt 2013/31**

(21) Anmeldenummer: **10724326.3**

(22) Anmeldetag: **16.06.2010**

(51) Int Cl.:
***F02D 41/00*** (2006.01) ***F02D 41/14*** (2006.01)

(86) Internationale Anmeldenummer:
**PCT/EP2010/003608**

(87) Internationale Veröffentlichungsnummer:
**WO 2011/000474 (06.01.2011 Gazette 2011/01)**

(54) **VERFAHREN ZUR REGELUNG EINES GASMOTORS**

METHOD FOR REGULATING A GAS ENGINE

PROCÉDÉ DE RÉGULATION D'UN MOTEUR À GAZ

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **03.07.2009 DE 102009033082**

(43) Veröffentlichungstag der Anmeldung:
**09.05.2012 Patentblatt 2012/19**

(73) Patentinhaber: **MTU Friedrichshafen GmbH**
**88045 Friedrichshafen (DE)**

(72) Erfinder: **KLÄSER-JENEWEIN, Ludwig**
**88699 Frickingen (DE)**

(56) Entgegenhaltungen:
**EP-A2- 2 039 916**
**DE-B3-102007 045 195**
**DE-B3-102007 056 623**
**DE-B3-102008 006 708**
**US-B1- 6 340 005**
**US-B1- 7 082 924**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Regelung eines Gasmotors, bei dem in Abhängigkeit eines Soll-Volumenstroms sowohl ein Brennstoffvolumen als Anteil eines Brennstoff-Luftgemisches als auch ein Gemischdruck des Brennstoff-Luftgemisches im Receiverrohr vor den Einlassventilen des Gasmotors festgelegt werden.

Gasmotoren werden häufig als Antrieb für Notstrom-Generatoren, Schnellbereitschaftsaggregate oder für Anlagen zur kombinierten Strom- und Wärmeerzeugung (BHKW) verwendet. Dabei wird der Gasmotor bei einem Verbrennungsluftverhältnis von zum Beispiel 1.7, also im Magerbetrieb mit Luftüberschuss, betrieben. Typischerweise umfasst der Gasmotor eine Gasdrosselklappe zum Festlegen des Gasanteils im Brennstoff-Luftgemisch, einen Mischer zum Zusammenführen des brennbaren Gases mit der Luft, einen Verdichter als Teilaggregat eines Abgasturboladers, einen Kühler und eine Gemischdrosselklappe. Über die Gemischdrosselklappe werden die Füllung der Arbeitszylinder und damit das Drehmoment des Gasmotors festgelegt. Die Füllung der Arbeitszylinder wiederum wird aus dem Druck des Brennstoff-Luftgemisches bei sonst konstant gehaltenen Einflussgrößen berechnet, zum Beispiel bei konstanter Receiverrohrtemperatur, bei konstanter Drehzahl und bei konstantem Verbrennungsluftverhältnis.

Aus der DE 10 2007 045 195 B3 ist ein Regelverfahren für einen stationären Gasmotor mit Generator bekannt, bei dem aus einer Drehzahl-Regelabweichung über einen Drehzahlregler ein Reglermoment als Stellgröße bestimmt wird. Aus dem Reglermoment wiederum und der Ist-Drehzahl wird über ein Wirkungsgrad-Kennfeld ein Soll-Volumenstrom bestimmt, welcher sowohl die Eingangsgröße zur Ansteuerung der Gasdrosselklappe als auch die Eingangsgröße zur Festlegung des Gemischdrucks im Receiverrohr darstellt. Zentrales Element ist die parallele Ansteuerung der beiden Stellorgane in Abhängigkeit derselben Steuergröße, hier dem Soll-Volumenstrom. Die Einstellung des Gemischdrucks im Receiverrohr erfolgt über einen unterlagerten Receiverrohr-Druckregelkreis. In diesem Receiverrohr-Druckregelkreis entsprechen der Soll-Receiverrohrdruck der Führungsgröße und der gemessene Receiverrohrdruck der Regelgröße. Der Gasmotor und der Generator entsprechen dann der Regelstrecke. Berechnet wird der Soll-Receiverrohrdruck aus dem Soll-Volumenstrom unter Berücksichtigung der Ist-Drehzahl des Gasmotors, der Temperatur im Receiverrohr und Konstantwerten. Als Konstantwerte sind unter anderem das Verbrennungsluftverhältnis und ein stöchiometrischer Luftbedarf ausgeführt. Das dargestellte Verfahren hat sich in der Praxis bewährt. Kritisch bleibt jedoch der Einfluss unterschiedlicher Gasqualitäten (Volumenanteil) innerhalb der gleichen Gasfamilie auf die Emissionswerte.

Die EP 2039916 A2 beschreibt ein Verfahren zur Regelung eines Gasmotors, bei dem Qualitäteschwanlangen des gasforungen Krafstottes berüchsichtigt werden.

Auch die DE 699 26 036 T2 beschreibt ein Verfahren zur Regelung eines Gasmotors, bei dem aus der Drehzahlregelabweichung über einen PID-Regler ein Stellsignal zur Ansteuerung der Gemischdrosselklappe berechnet wird. Ebenfalls in Abhängigkeit der Drehzahlregelabweichung wird ein Korrekturwert bestimmt, über welchen dann das Stellsignal für die Gasdrosselklappe verändert wird. Zielsetzung des Verfahrens ist es jedoch über die Korrektur Schwingungen der Motordrehzahl zu unterdrücken, welche nach einer Änderung der Soll-Motordrehzahl auftreten.

Ausgehend von einem Regelverfahren mit paralleler Ansteuerung der Gas- und Gemischdrosselklappe sowie unterlagertem Receiverrohr-Druckregelkreis, liegt der Erfindung die Aufgabe zu Grunde, den Einfluss einer unterschiedlichen Gasqualität auf das Regelverfahren zu minimieren.

Gelöst wird die Aufgabe durch ein Verfahren zur Regelung eines Gasmotors mit den Merkmalen von Anspruch 1. Die Ausgestaltungen sind in den Unteransprüchen dargestellt.

Der Einfluss unterschiedlicher Gasqualität wird dadurch minimiert, dass eine Abweichung des Reglermoments, also der Stellgröße des Drehzahlreglers, zum Generatormoment berechnet wird und der Soll-Receiverrohrdruck an Hand dieser Abweichung korrigiert wird. Die Abweichung ist ein Maß dafür um welchen Betrag der Energieinhalt des tatsächlich verwendeten Gases, zum Beispiel Biogas, vom Energieinhalt des Referenzgases abweicht. Auf dieses Referenzgas wird der Gasmotor auf einem Prüfstand eingemessen, wobei als Referenzgas Erdgas verwendet wird. Für das Gas vor Ort, welches als Mischgas aus Gasen einer bekannten Gasfamilie vorkommt, müssen die Brennstoffparameter bekannt sein. Diese sind der Heizwert, der stöchiometrische Luftbedarf und die Dichte. Die Brennstoffparameter werden dann als feste Größen im System abgelegt. Der Drehzahlregler, über den das Reglermoment berechnet wird, referenziert auf das Erdgas. Korrigiert wird der Soll-Receiverrohrdruck, indem er aus korrigierten Eingangsgrößen, nämlich einem korrigierten Soll-Volumenstrom, einem korrigierten Verbrennungsluftverhältnis und einem korrigierten Luftbedarf, berechnet wird.

Berechnet wird der korrigierte Soll-Volumenstrom, indem der Soll-Volumenstrom mit dem Quadrat der Abweichung multipliziert wird. Das korrigierte Verbrennungsluftverhältnis wird aus einem Referenz-Verbrennungsluftverhältnis und der Abweichung berechnet, wobei das Referenz-Verbrennungsluftverhältnis über ein Kennfeld in Abhängigkeit des Reglermoments und der Ist-Drehzahl des Gasmotors berechnet wird. Der korrigierte Luftbedarf wird über ein Rekursionsverfahren ebenfalls in Abhängigkeit der Abweichung ermittelt.

Die Anwendung des erfindungsgemäßen Verfahrens bietet den Vorteil, dass trotz Streuung der Gasqualität die Leistungsabgabe des Gasmotors unverändert bleibt. Ein mit zum Beispiel Biogas betriebener Gasmotor hat daher die gleiche Leistungsabgabe wie ein mit Erdgas betriebener Gasmotor. Variiert der Volumenanteil des brennbaren Gases, so wird über das erfindungsgemäße Verfahren der Soll-Receiverrohrdruck angepasst, so dass die Leistungsabgabe auch in diesem Fall unverändert bleibt. Der Volumenanteil muss daher nicht bekannt sein. Als Konsequenz ergibt sich die gleiche Schadstoffemission wie beim Referenzgas. Da das Verfahren auf den bereits vorhandenen Sensorsignalen aufbaut, sind Änderungen oder Ergänzungen an der Sensorik sowie am elektronischen Motorsteuergerät nicht erforderlich. Bereits ausgelieferte Gasmotoren können daher problemlos mit dem erfindungsgemäßen Verfahren nachgerüstet werden, zum Beispiel bei einer Wartung. Gegenüber einer Verbrennungsluftverhältnis-Regelung bietet die parallele Ansteuerung der Gasdrosselklappe und der Gemischdrosselklappen in Abhängigkeit derselben Steuergröße den Vorteil einer verkürzten Reaktionszeit und eines präziseren Einschwingens mit verbesserter Einstellbarkeit des Gesamtsystems. Als Konsequenz ergibt sich eine gleichmäßige Regelung der Motorleistung.

In den Zeichnungen ist ein bevorzugtes Ausführungsbeispiel dargestellt. Es zeigen:

Figur 1 ein Gesamtschaubild,
Figur 2 ein Blockschaltbild,
Figur 3 die Berechnung des Soll-Receiverrohrdrucks als Blockschaltbild,
Figur 4 die Berechnung des korrigierten Luftbedarfs als Blockschaltbild,
Figur 5 einen Programm-Ablaufplan und
Figur 6 ein Unterprogramm.

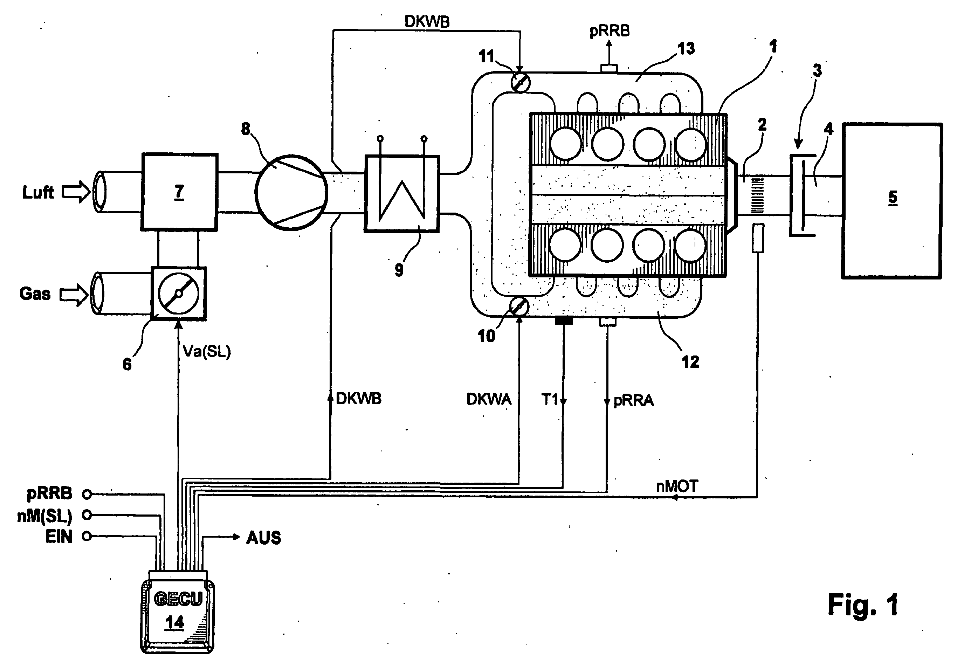

Die Figur 1 zeigt ein Gesamtschaubild eines Gasmotors 1 in V-Anordnung mit einem Generator 5. Angetrieben wird der Generator 5 vom Gasmotor 1 über eine Welle 2, eine Kupplung 3 und eine Welle 4. Über den Generator 5 wird elektrische Energie erzeugt, welche in ein elektrisches Netz eingespeist wird. Dem Gasmotor 1 sind folgende mechanische Komponenten zugeordnet: eine Gasdrosselklappe 6 zum Festlegen eines zugeführten Brennstoff-Volumenstroms, zum Beispiel Biogas, ein Mischer 7 zur Zusammenführung von Luft und Brennstoff, ein Verdichter 8 als Teilaggregat eines Abgasturboladers, ein Kühler 9, eine A-seitige Gemischdrosselklappe 10 im A-seitigen Receiverrohr 12 und eine B-seitige Gemischdrosselklappe 11 im B-seitigen Receiverrohr 13 des Gasmotors 1. Anstelle der Drosselklappen, also der Gasdrosselklappe 6 und den Gemischdrosselklappen 10 sowie 11, können selbstverständlich auch andere Stelleinrichtungen verwendet werden, zum Beispiel ein Venturispaltmischer oder ein Drehschieber.

Über ein elektronisches Motorsteuergerät 14 (GECU) wird die Betriebsweise des Gasmotors 1 festgelegt. Das elektronische Motorsteuergerät 14 beinhaltet die üblichen Bestandteile eines Mikrocomputersystems, beispielsweise einen Mikroprozessor, I/O-Bausteine, Puffer und Speicherbausteine (EEPROM, RAM). In den Speicherbausteinen sind die für den Betrieb des Gasmotors 1 relevanten Betriebsdaten in Kennfeldern/Kennlinien appliziert. Über diese berechnet das elektronische Motorsteuergerät 14 aus den Eingangsgrößen die Ausgangsgrößen. In der Figur 1 sind als Eingangsgrößen dargestellt: der A-seitige Receiverrohrdruck pRRA, eine Gemischtemperatur T1, ein B-seitiger Receiverrohrdruck pRRB, die (ungefilterten) Rohwerte der Motordrehzahl nMOT des Gasmotors 1, eine Soll-Drehzahl nM(SL), die von einem nicht dargestellten Anlagenregler vorgegeben wird, und eine Eingangsgröße EIN. Unter der Eingangsgröße EIN sind die weiteren Eingangssignale zusammengefasst, beispielsweise die Öltemperatur. Als Ausgangsgrößen des elektronischen Motorsteuergeräts 14 sind dargestellt: ein angepasster Soll-Volumenstrom Va(SL) zur Ansteuerung der Gasdrosselklappe 6, ein A-seitiger Gemisch-Drosselklappenwinkel DKWA zur Ansteuerung der A-seitigen Gemischdrosselklappe 10, ein B-seitiger Gemisch-Drosselklappenwinkel DKWB zur Ansteuerung der B-seitigen Gemischdrosselklappe 11 und ein Signal AUS. Das Signal AUS steht stellvertretend für die weiteren Signale zur Steuerung und Regelung des Gasmotors 1.

Die Anordnung besitzt folgende allgemeine Funktionalität: Über die Stellung der Gasdrosselklappe 6 wird ein Brennstoff-Volumenstrom, welcher dem Mischer 7 zugeführt wird, eingestellt. Die Position der A-seitigen Gemischdrosselklappe 10 definiert ein A-seitiges Gemischvolumen und damit den A-seitigen Receiverrohrdruck pRRA im A-seitigen Receiverrohr 12 vor den Einlassventilen des Gasmotors 1. Über die B-seitige Gemischdrosselklappe 11 wird der B-seitige Receiverrohrdruck pRRB vor den Einlassventilen des Gasmotors 1 festgelegt.

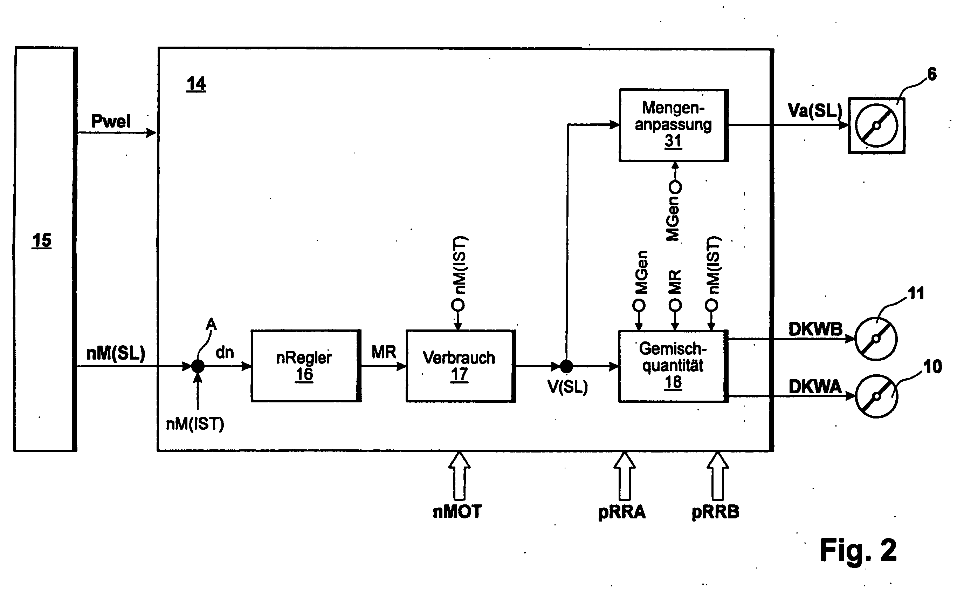

In der Figur 2 ist ein Blockschaltbild zur Ansteuerung der beiden Gemischdrosselklappen 10 sowie 11 und der Gasdrosselklappe 6 dargestellt. Das Bezugszeichen 15 kennzeichnet den Anlagenregler des Generators. Das Bezugszeichen 14 kennzeichnet als reduziertes Blockschaltbild das elektronische Motorsteuergerät, wobei die dargestellten Elemente die Programmschritte eines ausführbaren Programms repräsentieren. Die Eingangsgrößen des elektronischen Motorsteuergeräts 14 sind bei dieser Darstellung die Rohwerte der Motordrehzahl nMOT, der A-seitige Receiverrohrdruck pRRA, der B-seitige Receiverrohrdruck pRRB, die Soll-Drehzahl nM(SL) und eine elektrische Wirkleistung Pwel. Die Soll-Drehzahl nM(SL) und die elektrische Wirkleistung Pwel werden vom Anlagenregler 15 bereitgestellt. Im elektronischen Motorsteuergerät 14 wird aus der elektrischen Wirkleistung Pwel das Generatormoment MGen berechnet. Aus den Rohwerten der Motordrehzahl nMOT berechnet das elektronische Motorsteuergerät 14 über ein nicht dargestelltes Drehzahlfilter die Ist-Drehzahl nM(IST). Die Ausgangsgrößen des elektronischen Motorsteuergeräts 14 sind bei dieser Darstellung der A-seitige Gemisch-Drosselklappenwinkel DKWA zur Ansteuerung der A-seitigen Gemischdrosselklappe 10, der B-seitige Gemisch-Drosselklappenwinkel DKWB zur Ansteuerung der B-seitigen Gemischdrosselklappe 11 und der angepasste Soll-Volumenstrom Va(SL) zur Ansteuerung der Gasdrosselklappe 6.

Vom Anlagenregler 15 wird als Leistungswunsch die Soll-Drehzahl nM(SL) vorgegeben, zum Beispiel nM(SL) =1500 1/min einer Frequenz von 50 Hz entsprechend. An einem Punkt A wird aus der Soll-Drehzahl nM(SL) und der Ist-Drehzahl nM(IST) eine Drehzahl-Regelabweichung dn berechnet. Aus der Drehzahl-Regelabweichung dn wiederum berechnet ein Drehzahlregler 16 als Stellgröße das Reglermoment MR. In der Praxis ist der Drehzahlregler 16 als PIDT1-Regler ausgeführt. Das Reglermoment MR ist die erste Eingangsgröße eines Verbrauchskennfelds 17. Die zweite Eingangsgröße entspricht der Ist-Drehzahl nM(IST). In Abhängigkeit der beiden Eingangsgrößen wird über das Verbrauchskennfeld 17 ein Soll-Volumenstrom V(SL) bestimmt. Der Soll-Volumenstrom V(SL) ist sowohl die Eingangsgröße für eine Mengenanpassung 31 als auch für eine Gemischquantität 18. Über die Mengenanpassung 31 wird der Soll-Volumenstrom V(SL) zumindest in Abhängigkeit des Generatormoments MGen angepasst. Die Ausgangsgröße der Mengenanpassung 31 ist ein angepasster Soll-Volumenstrom Va(SL), welcher die Eingangsgröße der Gasdrosselklappe 6 ist. In der Gasdrosselklappe 6 ist eine Verarbeitungselektronik integriert, über welche dem Wert des angepassten Soll-Volumenstroms Va(SL) eine entsprechende Querschnittsfläche und ein entsprechender Winkel zugeordnet werden. Über die Gasdrosselklappe 6 wird ein Brennstoff-Volumenstrom als Gasanteil des Brennstoff-Luftgemisches eingestellt.

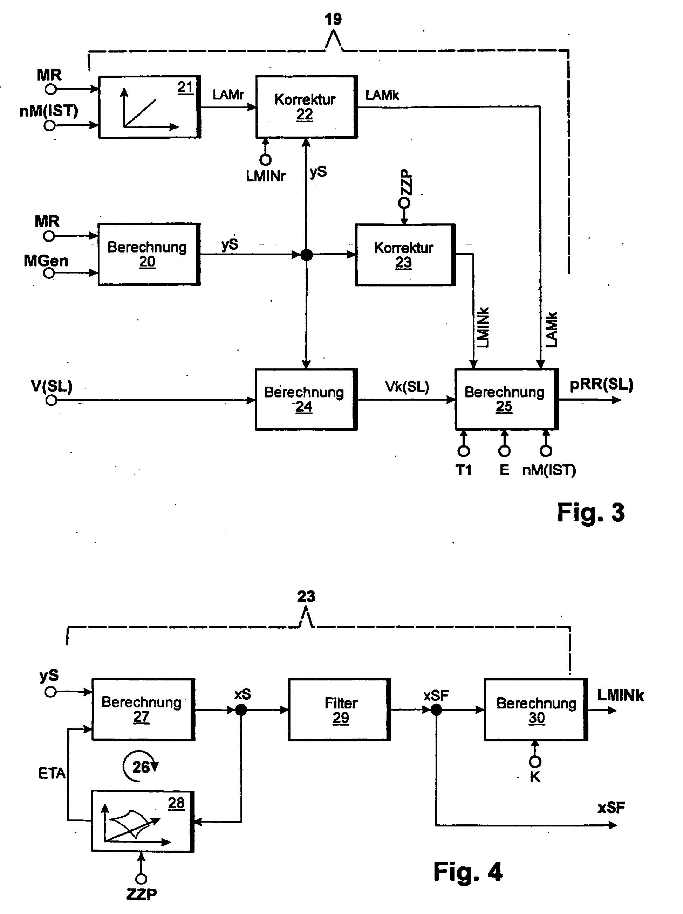

In der Gemischquantität 18 sind sowohl die Berechnung des Soll-Receiverrohrdrucks als auch ein unterlagerter Receiverrohr-Druckregelkreis zusammengefasst. Die Umrechnung des Soll-Volumenstroms V(SL) innerhalb der Gemischquantität 18 ist in der Figur 3 dargestellt und wird in Verbindung mit dieser beschrieben. Wie vorliegend dargestellt sind die weiteren Eingangsgrößen der Gemischquantität 18 das Generatormoment MGen, das Reglermoment MR, die Ist-Drehzahl nM(IST) und die beiden Receiverrohrdrücke pRRA sowie pRRB als Regelgrößen des unterlagerten Receiverrohr-Druckregelkreises. Über die Gemischquantität 18 werden der A-seitige Gemisch-Drosselklappenwinkel DKWA und der B-seitige Gemisch-Drosselklappenwinkel DKWB berechnet. Mit dem A-seitigen Gemisch-Drosselklappenwinkel DKWA wird die A-seitige Gemischdrosselklappe 10 angesteuert, über welche der A-seitigen Receiverrohrdrucks pRRA geregelt wird. Mit dem B-seitigen Gemisch-Drosselklappenwinkel DKWB wird die B-seitige Gemischdrosselklappe 11 angesteuert, über welche der B-seitige Receiverrohrdruck pRRB geregelt wird. Wie aus der Figur deutlich wird, ist ein zentrales Element die parallele Ansteuerung der Gasdrosselklappe und Gemischdrosselklappen in Abhängigkeit derselben Steuergröße, hier dem Soll-Volumenstrom V(SL).

In der Figur 3 ist in einem Blockschaltbild eine Funktionsblock 19 zur Bestimmung des Soll-Receiverrohrdrucks pRR(SL) dargestellt, welcher ein Teil der Gemischquantität 18 ist. Die Eingangsgrößen des Funktionsblocks 19 sind das vom Drehzahlregler (Fig. 2: 16) berechnete Reglermoment MR, die Ist-Drehzahl nM(IST), das Generatormoment MGen und der Soll-Volumenstrom V(SL). Die Ausgangsgröße ist der Soll-Receiverrohrdruck pRR(SL), welcher dann die Führungsgröße für den nachgeordneten Receiverrohr-Druckregelkreis ist. Ein entsprechender Receiverrohr-Druckregelkreis ist beispielsweise in der DE 10 2007 045 195 B3 dargestellt. Über eine Berechnung 20 wird aus dem Reglermoment MR und dem Generatormoment MGen eine Abweichung yS bestimmt, indem der Quotient MR/MGen berechnet wird. Die Abweichung yS ist ein Maß dafür um welchen Betrag der Energieinhalt des tatsächlich verwendeten Brennstoffs vom Energieinhalt des Referenzbrennstoffs abweicht. Die Einheit des Energieinhalts wird in Kilowattstunde je Normkubikmeter Gas angegeben (kWh/nM$^3$). Vom Hersteller des Gasmotors ist das System auf Erdgas als Referenzbrennstoff eingestellt. Wird Erdgas verwendet, dann beträgt der Quotient MR/MGen gleich eins. Wird hingegen ein Gas mit niedrigerem Energieinhalt verwendet, zum Beispiel Biogas, dann kann je nach Inertgasanteil der Quotient im Bereich zwischen 1,4 bis 1,5 liegen.

Über ein Kennfeld 21 wird dem Reglermoment MR und der Ist-Drehzahl nM(IST) ein Referenz-Verbrennungsluftverhältnis LAMr zugeordnet. Das Referenz-Verbrennungsluftverhältnis LAMr ist die erste Eingangsgröße einer Korrektur 22. Die zweite Eingangsgröße ist ein Referenz-Luftbedarf LMINr, welcher hier konstant ist. Der Referenz-Luftbedarf LMINr entspricht dem stöchiometrischen Luftbedarf um einen Kubikmeter des Referenzgases vollständig zu verbrennen. Die dritte Eingangsgröße ist die Abweichung yS. Über die Korrektur 22 wird das korrigierte Verbrennungsluftverhältnis LAMk gemäß folgender Beziehung berechnet:

$$\mathrm{LAMk} = \mathrm{LAMr} + [(1-\mathrm{yS}^2) / \mathrm{LMINr}] \qquad (1)$$

Die Ausgangsgröße der Korrektur 22, also das korrigierte Verbrennungsluftverhältnis LAMk, ist die erste korrigierte Eingangsgröße einer Berechnung 25 zur Bestimmung des Soll-Receiverrohrdrucks pRR(SL). Über eine Korrektur 23 wird in Abhängigkeit der Abweichung yS ein korrigierter Luftbedarf LMINk berechnet. Die Korrektur 23 ist in der Figur 4 dargestellt und wird in Verbindung mit dieser beschrieben. Der korrigiert Luftbedarf LMINk ist die zweite korrigierte Eingangsgröße der Berechnung 25. Die dritte korrigierte Eingangsgröße der Berechnung 25 ist ein korrigierter Soll-Volumenstrom Vk(SL). Berechnet wird dieser, indem der Soll-Volumenstrom V(SL) mit dem Quadrat der Abweichung yS multipliziert wird, Berechnung 24. Über die Berechnung 25 wird der Soll-Receiverrohrdruck pRR(SL) gemäß folgender Beziehung berechnet:

$$pRR(SL) = 2 \cdot yS^2 \cdot T1 \cdot p0 \cdot [1+LAMk \cdot LMINk] \cdot Vk(SL) / [LG \cdot VH \cdot nM(IST) \cdot T0] \qquad (2)$$

Hierin bedeuten yS die Abweichung, T1 die im Receiverrohr gemessene Temperatur, p0 den Normluftdruck auf Normal-Null (1013 hpa), LAMk das korrigierte Verbrennungsluftverhältnis, LMINk den korrigierte Luftbedarf, Vk(SL) den korrigierte Soll-Volumenstrom, LG den Liefergrad, VH das Hubvolumen des Zylinders, nM(IST) die Ist-Drehzahl des Gasmotors und T0 die Normtemperatur (273,15K). In der Figur sind der Liefergrad LG, das Hubvolumen VH und die Normtemperatur T0 unter dem Bezugszeichen E zusammengefasst. Wie aus der Figur 3 ersichtlich ist, wird der Soll-Receiverrohrdruck pRR(SL) korrigiert, indem korrigierte Eingangsgrößen verwendet werden. Die Abweichung yS hat sich hierbei als zielführende Korrekturgröße erwiesen, da diese ein Maß dafür ist um welchen Betrag der Energieinhalt des tatsächlich verwendeten Gases, zum Beispiel Biogas mit 45 Volumenprozent Methangas, vom Energieinhalt des Referenzgases, hier Erdgas, abweicht.

In der Figur 4 ist die Berechnung des korrigierten Luftbedarfs als Blockschaltbild dargestellt. Die Eingangsgrößen sind die Abweichung yS und der Zündzeitpunkt ZZP. Die Ausgangsgrößen sind der korrigiert Luftbedarf LMINk und ein Mischungsparameter xSF. Der korrigierte Luftbedarf LMINk wird mittels einer Rekursionsschleife 26 berechnet. An Hand der Abweichung yS und einem Wirkungsgradverhältnis ETA wird über eine Berechnung 27 ein Mischungsparameter xS berechnet. Beim ersten Durchlauf der Rekursionschleife ist der Startwert des Wirkungsgradverhältnisses ETA=1. Berechnet wird der Mischungsparameter gemäß folgender Beziehung:

$$xS = \{HUO - [HUr \cdot ETA \cdot (1/yS^2)]\} / [HUO - HUU] \qquad (3)$$

Hierin ist xS der Mischungsparameter. Die Konstante HUO entspricht dem größten anzunehmende Heizwert des tatsächlich verwendeten Brennstoffes, zum Beispiel Biogas. Die Konstante HUU entspricht dem kleinsten anzunehmenden Heizwert des tatsächlich verwendeten Brennstoffes. Die Konstante HUr entspricht dem Heizwert des Referenzbrennstoffs, hier: Erdgas. Zur Festlegung der Konstanten HUO und HUU müssen die Provenienz und die Gasfamilie, denen die Brennstoffe entstammen, bekannt sein. Im Betrieb des Gasmotors werden diese nicht verändert. Der Mischungsparameter xS wird danach auf ein Wirkungsgrad-Kennfeld 28 geführt, über welches in Abhängigkeit des Mischungsparameters xS und des Zündzeitpunkts ZZP ein neues Wirkungsgradverhältnis ETA ermittelt wird. Das Wirkungsgradverhältnis ETA kann als Verhältnis eines tatsächlichen Wirkungsgrads zu einem auf dem Prüfstand ermittelten Referenzwirkungsgrad bei Verwendung des Referenzbrennstoffs (Erdgas) ausgeführt sein. Das neue Wirkungsgradverhältnis ETA wird danach auf die Berechnung 27 zurückgekoppelt. In der Berechnung 27 wird dann entsprechend der Formel (3) erneut ein Mischungsparameter xS aus dem neuen Wirkungsgradverhältnis ETA berechnet. Die Rekursionsschleife wird solange durchlaufen bis ein Abbruchkriterium erkannt wird. Ein Abbruchkriterium liegt dann vor, wenn die Rekursionsschleife 26 i-Mal durchlaufen wurde. Alternativ hierzu liegt ein Abbruchkriterium dann vor, wenn die Differenz von zwei rekursiv berechneten Mischungsparametern kleiner als ein Grenzwert ist. Mit Erkennen des Abbruchkriteriums wird der zuletzt berechnete Mischungsparameter als gültig gesetzt. Der Rekursionsschleife 26 nachgeordnet ist ein Filter 29, typischerweise ein PT1-Filter, über welches dann die als gültig gesetzten Mischungsparameter gefiltert werden. Aus dem gefilterten Mischungsparameter xSF und Konstantwerten K wird über eine Berechnung 30 der korrigierten Luftbedarf LMINk, welcher im Funktionsblock 19 der Figur 3 weiterverarbeitet wird, berechnet. Die Berechnung erfolgt gemäß folgender Beziehung:

$$LMINk = xSF \cdot LMINu + (1-xSF) \cdot LMINo \qquad (4)$$

Hierin bedeuten LMINu der minimale Luftbedarf des tatsächlich verwendeten Brennstoffes und LMINo der maximale Luftbedarf des tatsächlich verwendeten Brennstoffes, welche die Konstantwerte darstellen. Der Mischungsparameter xSF wird intern weiter verarbeitet, zum Beispiel zur Anpassung der Brennstoffdichte und des Zündzeitpunkts.

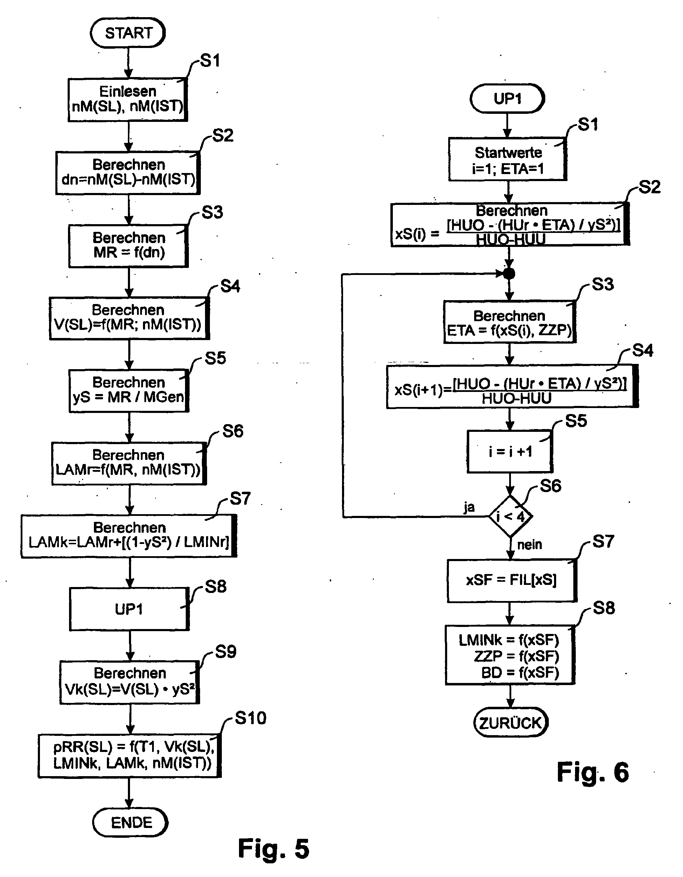

In der Figur 5 ist das erfindungsgemäße Verfahren in einem Programm-Ablaufplan dargestellt. Bei S1 werden die Ist-Drehzahl nM(IST) und die Soll-Drehzahl nM(SL) eingelesen und anschließend bei S2 hieraus die Drehzahl-Regelabweichung dn berechnet. Aus der Drehzahl-Regelabweichung dn bestimmt der Drehzahlregler, zum Beispiel über einen PIDT1-Algorithmus, als Stellgröße das Reglermoment MR, S3. Über das Verbrauchskennfeld (Fig. 2: 17) wird bei S4 in Abhängigkeit des Reglermoments MR und der Ist-Drehzahl nM(IST) der Soll-Volumenstrom V(SL) berechnet. Danach wird bei S5 die Abweichung yS aus dem Reglermoment MR und dem Generatormoment MGen bestimmt, indem der Quotient MR/MGen berechnet wird. Bei S6 wird dem Reglermoment MR und der Ist-Drehzahl nM (IST) über ein Kennfeld (Fig. 3: 21) ein Referenz-Verbrennungsluftverhältnis LAMr zugeordnet. Bei S7 wird dann mittels der Formel (1) das korrigierte Verbrennungsluftverhältnis LAMk bestimmt. Im Anschluss daran wird bei S8 in ein Unterprogramm UP1 zur Berechnung des korrigierten Luftbedarfs LMINk verzweigt. Das Unterprogramm UP1 ist in der Figur 6 dargestellt und wird in Verbindung mit dieser beschrieben. Nach der Rückkehr aus dem Unterprogramm UP1 wird bei S9 der korrigierte Soll-Volumenstrom Vk(SL) aus dem Soll-Volumenstrom V(SL) und der Abweichung yS berechnet. Bei S10 wird dann entsprechend der Formel (2) der Soll-Receiverrohrdruck pRR(SL) in Abhängigkeit des korrigierten Soll-Volumenstroms Vk(SL), des korrigierten Luftbedarfs LMINk und des korrigierte Verbrennungsluftverhältnises LAMk berechnet. Damit ist der Programmablauf beendet.

In der Figur 6 ist das Unterprogramm UP1 zur Berechnung des korrigierten Luftbedarfs LMINk mittels des Rekursionsverfahrens dargestellt. Bei S1 werden eine Laufvariable i und das Wirkungsgradverhältnis ETA auf den Startwert Eins gesetzt. Bei S2 wird dann der Mischungsparameter xS mittels der Formel (3) berechnet. Die Konstante HUO entspricht dem größten anzunehmende Heizwert des tatsächlich verwendeten Brennstoffes, zum Beispiel Biogas. Die Konstante HUU entspricht dem kleinsten anzunehmenden Heizwert des tatsächlich verwendeten Brennstoffes. Die Konstante HUr entspricht dem Heizwert des Referenzbrennstoffs, hier: Erdgas. Zur Festlegung der Konstanten HUO und HUU müssen die Provenienz und die Gasfamille, denen die Brennstoffe entstammen, bekannt sein. Im Betrieb des Gasmotors werden diese nicht verändert. Beim ersten Programmdurchlauf ist der Mischungsparameter also der Mischungsparameter xS(1). Im Anschluss wird bei S3 über ein Wirkungsgrad-Kennfeld (Fig. 4: 28) dem Mischungsparameter und dem Zündzeitpunkt ZZP ein neues Wirkungsgradverhältnis ETA zugeordnet. Der Wirkungsgradverhältnis ETA kann als Quotient eines tatsächlichen Wirkungsgrads zum Referenzwirkungsgrad ausgeführt sein. Bei S4 wird dann ein neuer Mischungsparameter mit dem zuvor berechneten neuen Wirkungsgradverhältnis ETA bestimmt und als neuer Mischungsparameter gesetzt. Beim ersten Durchlauf lautet dann der neue Mischungsparameter xS(2). Danach wird die Laufvariabel i um Eins erhöht, S5, und deren Wert bei S6 abgefragt. Ist die Laufvariable i kleiner als vier, Abfrageergebnis S6: ja, so wird der Programmablauf wieder bei S3 fortgesetzt. Ist das Abfrageergebnis bei S6 negativ, so wird der zuletzt berechnete Mischungsparameter als gültig gesetzt. Die innerhalb eines Zeitraums derart berechneten gültigen Mischungsparameter werden bei S7 gefiltert, zum Beispiel über ein PT1-Filter. Das Ergebnis entspricht dem gefilterten Mischungsparameter xSF. Bei S8 wird in Abhängigkeit der gefilterte Mischungsparameters xSF der korrigierte Luftbedarf LMINk berechnet. Der gefilterte Mischungsparameter xSF wird intern weiter verarbeitet, zum Beispiel zur Anpassung der Brennstoffdichte BD und des Zündzeitpunkts ZZP. Danach wird in das Hauptprogramm der Figur 5 zu S8 zurückgekehrt.

Die Erfindung wurde an Hand eines Gasmotors beschrieben, welcher einen Generator antreibt. Anstelle des Generators kann auch ein Schnellbereitschaftsaggregat oder ein Anlage zur kombinierten Strom- und Wärmeerzeugung (BHKW) zum Einsatz kommen. In diesem Fall entspricht dann das Generatormoment MGen dem Moment, welches vom zum Beispiel Schnellbereitschaftsaggregat abgegeben wird.

Bezugszeichen

| | |
|---|---|
| 1 | Gasmotor |
| 2 | Welle |
| 3 | Kupplung |
| 4 | Welle |
| 5 | Generator |
| 6 | Gasdrosselklappe |
| 7 | Mischer |
| 8 | Verdichter |
| 9 | Kühler |
| 10 | A-seitige Gemischdrosselklappe |
| 11 | B-seitige Gemischdrosselklappe |
| 12 | A-seitiges Receiverrohr |
| 13 | B-seitiges Receiverrohr |
| 14 | elektronisches Motorsteuergerät (GECU) |
| 15 | Anlagenregler |
| 16 | Drehzahlregler |
| 17 | Verbrauchskennfeld |
| 18 | Gemischquantität |
| 19 | Funktionsblock |
| 20 | Berechnung |
| 21 | Kennfeld |
| 22 | Korrektur |
| 29 | Filter |
| 30 | Berechnung |
| 31 | Mengenanpassung |

(fortgesetzt)

| | |
|---|---|
| 23 | Korrektur |
| 24 | Berechnung |
| 25 | Berechnung |
| 26 | Rekursionschleife |
| 27 | Berechnung |
| 28 | Wirkungsgrad-Kennfeld |

**Patentansprüche**

1. Verfahren zur Regelung eines Gasmotors (1) mit Generator (5), bei dem ein Reglermoment (MR) über einen Drehzahlregler (16) aus einer Drehzahl-Regelabweichung (dn) berechnet wird, bei dem ein Soll-Volumenstrom (V(SL)) zumindest in Abhängigkeit des Reglermoments (MR) berechnet wird, bei dem ein Brennstoffvolumen als Anteil eines Brennstoff-Luftgemisches in Abhängigkeit des Soll-Volumenstroms (V(SL)) festgelegt wird und bei dem ein Soll-Receiverrohrdruck (pRR(SL)) als Führungsgröße für einen Receiverrohr-Druckregelkreis zur Regelung des Gemischdrucks (pRRA, pRRB) eines Brennstoff-Luftgemisches im Receiverrohr (12, 13) vor den Einlassventilen des Gasmotors (1) ebenfalls in Abhängigkeit des Soll-Volumenstroms (V(SL)) berechnet wird,
**dadurch gekennzeichnet,**
**dass** eine Abweichung (yS) des Reglermoments (MR) zu einem Generatormoment (MGen) berechnet wird und der Soll-Receiverrohrdruck (pRR(SL)) an Hand der Abweichung (yS) korrigiert wird.

2. Verfahren nach Anspruch 1,
**dadurch gekennzeichnet,**
**dass** der Soll-Receiverrohrdruck (pRR(SL)) korrigiert wird, indem dessen Eingangsgrößen über die Abweichung (yS) korrigiert werden.

3. Verfahren nach Anspruch 2,
**dadurch gekennzeichnet,**
**dass** der Soll-Receiverrohrdruck (pRR(SL)) zumindest aus einem korrigierten Soll-Volumenstrom (Vk(SL)), einem korrigierten Verbrennungsluftverhältnis (LAMk) und einem korrigierten Luftbedarf (LMINk) berechnet wird.

4. Verfahren nach Anspruch 3,
**dadurch gekennzeichnet,**
**dass** der korrigierte Soll-Volumenstrom (Vk(SL)) berechnet wird, indem der Soll-Volumenstrom (V(SL)) mit dem Quadrat der Abweichung (yS) multipliziert wird.

5. Verfahren nach Anspruch 3,
**dadurch gekennzeichnet,**
**dass** das korrigierte Verbrennungsluftverhältnis (LAMk) zumindest aus einem Referenz-Verbrennungsluftverhältnis (LAMr) und der Abweichung (yS) berechnet wird, wobei das Referenz-Verbrennungsluftverhältnis (LAMr) über ein Kennfeld (21) in Abhängigkeit des Reglermoments (MR) und der Ist-Drehzahl (nM(IST)) des Gasmotors (1) berechnet wird.

6. Verfahren nach Anspruch 3,
**dadurch gekennzeichnet,**
**dass** der korrigierte Luftbedarf (LMINk) berechnet wird, indem ein erster Mischungsparameter in Abhängigkeit der Abweichung (yS) berechnet wird, indem aus dem ersten Mischungsparameter und einem Zündzeitpunkts (ZZP) ein Wirkungsgradverhältnis (ETA) berechnet wird, indem der erste Mischungsparameter rekursiv über das Wirkungsgradverhältnis (ETA) korrigiert . wird, indem mit Erkennen eines Abbruchkriteriums der zuletzt berechnete Mischungsparameter als gültiger Mischungsparameter gesetzt wird und indem der gültige Mischungsparameter mit Konstanten (K) multipliziert wird und das Ergebnis als korrigierter Luftbedarf (LMINk) gesetzt wird.

7. Verfahren nach Anspruch 6,
**dadurch gekennzeichnet,**
**dass** das Abbruchkriterium dann vorliegt, wenn das Rekursionsverfahren i-mal durchlaufen wurde oder wenn die Differenz von zwei berechneten Mischungsparametern (xS(i), xS(i+1)) kleiner als ein Grenzwert (GW) wird.

8. Verfahren nach Anspruch 6,
**dadurch gekennzeichnet,**
**dass** die gültigen Mischungsparameter gefiltert werden.

9. Verfahren nach Anspruch 1,
**dadurch gekennzeichnet,**
**dass** die Abweichung (yS) berechnet wird, indem ein Quotient des Reglermoments (MR) zum Generatormoment (MGen) berechnet wird.

10. Verfahren nach Anspruch 1,
**dadurch gekennzeichnet,**
**dass** ein A-seitiger Gemischdruck (pRRA) in einem A-Seitigen Receiverrohr (12) über einen ersten Receiverrohr-Druckregelkreis in Abhängigkeit des Soll-Receiverrohrdrucks (pRR(SL)) und ein B-seitiger Gemischdruck (pRRB) in einem B-Seitigen Receiverrohr (13) über einen zweiten Receiverrohr-Druckregelkreis ebenfalls in Abhängigkeit des Soll-Receiverrohrdrucks (pRR(SL)) geregelt werden.

## Claims

1. Method for regulating a gas engine (1) with a generator (5), in which a regulator torque (MR) is calculated from a rotational speed regulating deviation (dn) by means of a rotational speed regulator (16), in which a setpoint volume flow (V(SL)) is calculated at least as a function of the regulator torque (MR), in which a fuel volume is defined as a portion of a fuel/air mixture as a function of the setpoint volume flow (V(SL)), and in which a setpoint receiver pipe pressure (pRR(SL)) is calculated as a reference variable for a receiver pipe pressure regulating circuit for regulating the mixture pressure (pRRA, pRRB) of a fuel/air mixture in the receiver pipe (12, 13) upstream of the inlet valves of the gas engine (1), also as a function of the setpoint volume flow (V(SL)),
**characterized**
**in that** a deviation (yS) of the regulator torque (MR) with respect to a generator torque (MGen) is calculated, and the setpoint receiver pipe pressure (pRR(SL)) is corrected on the basis of the deviation (yS).

2. Method according to Claim 1, **characterized in that** the setpoint receiver pipe pressure (pRR(SL)) is corrected by correcting the input variables thereof by means of the deviation (yS).

3. Method according to Claim 2,
**characterized**
**in that** the setpoint receiver pipe pressure (pRR(SL)) is calculated at least from a corrected setpoint volume flow (Vk(SL)), a corrected combustion air ratio (LAMk) and a corrected air requirement (LMINk).

4. Method according to Claim 3,
**characterized**
**in that** the corrected setpoint volume flow (Vk(SL)) is calculated by multiplying the setpoint volume flow (V(SL)) by the square of the deviation (yS).

5. Method according to Claim 3,
**characterized**
**in that** the corrected combustion air ratio (LAMk) is calculated at least from a reference combustion air ratio (LAMr) and the deviation (yS), wherein the reference combustion air ratio (LAMr) is calculated by means of a characteristic diagram (21) as a function of the regulator torque (MR) and the actual rotational speed (nM(IST)) of the gas engine (1).

6. Method according to Claim 3,
**characterized**
**in that** the corrected air requirement (LMINk) is calculated in that a first mixture parameter is calculated as a function of the deviation (yS), in that an efficiency ratio (ETA) is calculated from the first mixture parameter and an ignition time (ZZP), in that the first mixture parameter is corrected recursively by means of the efficiency ratio (ETA), in that, when an abort criterion is detected, the mixture parameter calculated last is set as the valid mixture parameter, and in that the valid mixture parameter is multiplied by constants (K), and the result is set as a corrected air requirement (LMINk).

**7.** Method according to Claim 6, **characterized in that** the abort criterion is present when the recursion method has been run through i-times or if the difference between two calculated mixture parameters (xS(i), xS(i+1)) is smaller than a limiting value (GW).

**8.** Method according to Claim 6,
**characterized**
**in that** the valid mixture parameters are filtered.

**9.** Method according to Claim 1,
**characterized**
**in that** the deviation (yS) is calculated by calculating a quotient of the regulator torque (MR) with respect to the generator torque (MGen).

**10.** Method according to Claim 1,
**characterized**
**in that** an A-side mixture pressure (pRRA) in an A-side receiver pipe (12) is regulated by means of a first receiver pipe pressure regulating circuit as a function of the setpoint receiver pipe pressure (pRR(SL)), and a B-side mixture pressure (pRRB) in a B-side receiver pipe (13) is regulated by means of a second receiver pipe pressure regulating circuit, likewise as a function of the setpoint receiver pipe pressure (pRR(SL)).

## Revendications

**1.** Procédé de régulation d'un moteur à gaz (1) avec un générateur (5), dans lequel un couple de réglage (MR) est calculé par le biais d'un régulateur de régime (16) à partir d'un écart de réglage de régime (dn), dans lequel un débit volumique de consigne (V(SL)) est calculé au moins en fonction du couple de réglage (MR), dans lequel un volume de carburant en tant que proportion d'un mélange air/carburant est établi en fonction du débit volumique de consigne (V(SL)) et dans lequel une pression de consigne dans le tuyau de réception (pRR(SL)) en tant que grandeur directive pour un circuit de régulation de pression du tuyau de réception pour la régulation de la pression de mélange (pRRA, pRRB) d'un mélange air/carburant dans le tuyau de réception (12, 13) en amont des soupapes d'admission du moteur à gaz (1) est également calculée en fonction du débit volumique de consigne (V(SL)),
**caractérisé en ce**
**qu'**un écart (yS) du couple de réglage (MR) par rapport à un couple du générateur (MGen) est calculé et la pression de consigne dans le tuyau de réception (pRR(SL)) est corrigée à l'aide dudit écart (yS).

**2.** Procédé selon la revendication 1,
**caractérisé en ce que**
la pression de consigne dans le tuyau de réception (pRR(SL)) est corrigée en corrigeant ses grandeurs d'entrée par le biais de l'écart (yS).

**3.** Procédé selon la revendication 2,
**caractérisé en ce que**
la pression de consigne dans le tuyau de réception (pRR(SL)) est calculée au moins à partir d'un débit volumique de consigne corrigé (Vk(SL)), d'un rapport d'air comburant corrigé (LAMk) et d'un besoin en air corrigé (LMINk).

**4.** Procédé selon la revendication 3,
**caractérisé en ce que**
le débit volumique de consigne corrigé (Vk(SL)) est calculé en multipliant le débit volumique de consigne (V(SL)) par le carré de l'écart (yS).

**5.** Procédé selon la revendication 3,
**caractérisé en ce que**
le rapport d'air comburant corrigé (LAMk) est calculé à partir d'au moins un rapport d'air comburant de référence (LAMr) et de l'écart (yS), le rapport d'air comburant de référence (LAMr) étant calculé par le biais d'un champ caractéristique (21) en fonction du couple de réglage (MR) et du régime actuel (nM(IST)) du moteur à gaz (1).

**6.** Procédé selon la revendication 3,
**caractérisé en ce que**

le besoin en air corrigé (LMINk) est calculé en calculant un premier paramètre de mélange en fonction de l'écart (yS), en calculant, à partir du premier paramètre de mélange et d'un instant d'allumage (ZZP), un rapport de rendement (ETA), en corrigeant le premier paramètre de mélange de manière récurrente par le biais du rapport de rendement (ETA), en posant comme paramètre de mélange valable, avec reconnaissance d'un critère d'interruption, le dernier paramètre de mélange calculé, et en multipliant le paramètre de mélange valable par la constante (K) et en posant le résultat comme étant le besoin en air corrigé (LMINk).

7. Procédé selon la revendication 6,
**caractérisé en ce que**
le critère d'interruption se présente lorsque la procédure de récurrence a été effectuée i fois ou lorsque la différence entre deux paramètres de mélange calculés (xS(i), xS(i+1)) est inférieure à une valeur limite (GW).

8. Procédé selon la revendication 6,
**caractérisé en ce que**
les paramètres de mélange valables sont filtrés.

9. Procédé selon la revendication 1,
**caractérisé en ce que**
l'écart (yS) est calculé en calculant un quotient du couple de réglage (MR) sur le couple du générateur (MGen).

10. Procédé selon la revendication 1,
**caractérisé en ce**
**qu'**une pression de mélange du côté A (pRRA) dans un tuyau de réception (12) du côté A est régulée par le biais d'un premier circuit de régulation de pression du tuyau de réception en fonction de la pression de consigne dans le tuyau de réception (pRR(SL)) et une pression de mélange du côté B (pRRB) est régulée dans un tuyau de réception (13) du côté B par le biais d'un deuxième circuit de régulation de pression du tuyau de réception également en fonction de la pression de consigne dans le tuyau de réception (pRR(SL)).

5
4
3
2
1
13
12
pRRB
pRRA
nMOT
T1
11
10
DKWA
DKWB
9
DKWB
8
AUS
Va(SL)
7
6
GECU
14
Luft
Gas
pRRB
nM(SL)
EIN

Fig. 1

6
11
10
Va(SL)
DKWB
DKWA
Mengen-
anpassung
31
MGen
Gemisch-
quantität
18
MGen
MR
nM(IST)
Verbrauch
17
nM(IST)
V(SL)
MR
nRegler
16
dn
A
nM(IST)
14
pRRB
pRRA
nMOT
Pwel
nM(SL)
15

Fig. 2

19
MR
nM(IST)
21
LAMr
Korrektur
22
LAMk
LMINr
yS
ZZP
MR
Berechnung
20
yS
Korrektur
23
MGen
LMINk
LAMk
V(SL)
Berechnung
24
Vk(SL)
Berechnung
25
pRR(SL)
T1
E
nM(IST)

Fig. 3

23
yS
Berechnung
27
xS
Filter
29
xSF
Berechnung
30
LMINk
ETA
26
K
28
xSF
ZZP

Fig. 4

START
S1
Einlesen
nM(SL), nM(IST)
S2
Berechnen
dn=nM(SL)-nM(IST)
S3
Berechnen
MR = f(dn)
S4
Berechnen
V(SL)=f(MR; nM(IST))
S5
Berechnen
yS = MR / MGen
S6
Berechnen
LAMr=f(MR, nM(IST))
S7
Berechnen
LAMk=LAMr+[(1-yS²) / LMINr]
S8
UP1
S9
Berechnen
Vk(SL)=V(SL) • yS²
S10
pRR(SL) = f(T1, Vk(SL), LMINk, LAMk, nM(IST))
ENDE
UP1
S1
Startwerte
i=1; ETA=1
S2
Berechnen
xS(i) = [HUO - (HUr • ETA) / yS²)] / HUO-HUU
S3
Berechnen
ETA = f(xS(i), ZZP)
S4
xS(i+1)=[HUO - (HUr • ETA) / yS²)] / HUO-HUU
S5
i = i +1
S6
i < 4
ja
nein
S7
xSF = FIL[xS]
S8
LMINk = f(xSF)
ZZP = f(xSF)
BD = f(xSF)
ZURÜCK

Fig. 5

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102007045195 B3
- EP 2039916 A2
- DE 69926036 T2